# FASCICULE DE BREVET EUROPEEN

(11) **EP 1 910 107 B1**
(45) Date de publication et mention de la délivrance du brevet: **27.10.2010**
(21) Numéro de dépôt: 06762151.6
(22) Date de dépôt: 23.06.2006
(51) Int. Cl.: B60C 23/04

(54) **PROCEDE ET DISPOSITIF DE LOCALISATION DE LA POSITION D'UNE ROUE D'UN VEHICULE**
VERFAHREN UND VORRICHTUNG ZUR LOKALISIERUNG DER POSITION EINES FAHRZEUGRADS
METHOD AND DEVICE FOR LOCATING THE POSITION OF A WHEEL OF A VEHICLE

(30) Priorité: 04.08.2005 FR 0508313
(43) Date de publication de la demande: 16.04.2008
(73) Titulaire: Continental Automotive France, 31036 Toulouse Cedex 1 (FR)
(72) Inventeur: COSTES, Olivier, F-31270 Cugnaux (FR)
(86) Numéro de dépôt international: PCT/EP2006/006051
(87) Numéro de publication internationale: WO 2007/014600

(56) Documents cités:
- WO-A-02/051654
- WO-A-2005/018963
- DE-A1- 10 226 995
- FR-A- 2 863 204
- FR-A- 2 872 949

## Description

L'invention concerne un procédé et un dispositif de localisation de la position d'une roue d'un véhicule équipée d'un boîtier électronique adapté pour émettre, lors de la réception d'un signal de requête d'identification de puissance supérieure à un seuil de détection prédéterminé, et à destination d'une unité centrale montée sur le véhicule, des signaux représentatifs de paramètres de fonctionnement de la dite roue comportant, en outre, un code d'identification de cette dernière.

L'invention s'étend, en outre, à des procédés de localisation alliant le procédé selon l'invention et d'éventuels autres procédés de localisation pour effectuer la localisation de l'ensemble des roues d'un véhicule. Elle s'étend également aux dispositifs de localisation mettant en oeuvre de tels procédés de localisation.

De plus en plus de véhicules automobiles possèdent, à des fins de sécurité, des systèmes de surveillance comportant des boîtiers électroniques munis de capteurs montés sur chacune des roues du véhicule, dédiés à la mesure de paramètres, tels que pression ou température des pneumatiques équipant ces roues, et destinés à informer le conducteur de toute variation anormale du paramètre mesuré.

Ces systèmes de surveillance sont classiquement dotés d'un boîtier électronique monté sur chacune des roues du véhicule et comportant un capteur de température et / ou de pression, un microprocesseur et un émetteur radiofréquence (ou émetteur RF), et d'une unité centrale de réception des signaux émis par les émetteurs, comportant un calculateur intégrant un récepteur radiofréquence (ou récepteur RF) connecté à une antenne. Un tel système est notamment décrit dans la demande de Brevet DE 102 26 995.

Un des problèmes que nécessitent de résoudre de tels systèmes de surveillance réside dans l'obligation de devoir associer à chaque signal reçu par le récepteur de l'unité centrale, une information concernant la localisation du boîtier ayant émis le signal et donc de la roue à l'origine de ce signal, cette obligation perdurant pendant la durée de vie du véhicule, c'est à dire devant être respectée même après des changements de roues ou plus simplement des inversions de la position de ces roues.

A l'heure actuelle, une première méthode de localisation consiste à utiliser trois antennes basse fréquence positionnées chacune à proximité d'une des roues du véhicule, et à effectuer une procédure de localisation consistant à exciter successivement chacune de ces trois antennes par l'émission d'un champ magnétique basse fréquence.

Selon cette procédure, le capteur monté sur la roue située à proximité de l'antenne excitée commande, en réponse et à destination de l'unité centrale, l'émission d'un signal basse fréquence comportant un code d'identification du dit capteur, de sorte que l'excitation successive des trois antennes conduit à la localisation des trois boîtiers électroniques montés sur les roues jouxtant ces antennes, et par déduction, à la localisation du quatrième boîtier.

Le principal avantage d'un tel procédé réside dans le fait que la procédure de localisation est très rapide et conduit à une localisation quasi-instantanée après le démarrage du véhicule.

Par contre, cette solution impose d'équiper le véhicule de trois antennes avec toutes les sujétions afférentes : câbles de connexion, amplificateurs de commande..., de sorte qu'elle s'avère coûteuse.

Cet inconvénient relatif au coût d'installation des moyens de mise en oeuvre du procédé de localisation peut être résolu lorsque le véhicule est équipé d'un dispositif d'accès mains libres destiné à permettre d'accéder au dit véhicule et de démarrer ce dernier.

En effet, la solution consiste alors, tel que notamment décrit dans la demande de brevet WO 02/051654, à utiliser les antennes émettrices ainsi que leurs moyens d'alimentation incorporant un élévateur de tension, de ce dispositif d'accès mains libres, pour mettre en oeuvre la procédure de localisation des roues.

Tel que décrit dans la demande de brevet précitée, la mise en oeuvre de cette solution consiste, par exemple, à commander l'émission par les antennes émettrices d'un signal non codé lorsque les dites antennes sont utilisées en vue de la localisation des roues, et à commander l'émission d'un signal codé lors de l'utilisation des antennes à leur fin originale de contrôle de l'accès au véhicule.

Une telle solution très séduisante en théorie s'avère par contre très délicate à mettre en oeuvre dans la pratique. En effet, les antennes des dispositifs d'accès mains libres ne sont pas positionnées de façon idéale en vue de permettre la localisation des roues d'un véhicule.

De plus, le coût de revient de l'ensemble "antennes / élévateur de tension" rend cette solution inapplicable à un véhicule dépourvu de dispositif d'accès mains libres.

En conclusion, chacune des deux principales solutions mises en oeuvre actuellement en vue de la localisation de roues d'un véhicule, d'une part, présente une pluralité d'inconvénients propres, et d'autre part n'offre aucune souplesse d'utilisation.

La présente invention vise à pallier les inconvénients des procédés de localisation actuels ci-dessus décrits, et a pour principal objectif de fournir un procédé de localisation très performant conçu à la base pour permettre la localisation d'une roue de véhicule, mais pouvant éventuellement être associé à d'autres procédés pour permettre à moindres frais, et pour divers niveaux d'équipements d'un véhicule, la localisation des autres roues de ce véhicule

A cet effet, l'invention vise, en premier lieu, un procédé de localisation de la position d'une roue d'un véhicule équipée d'un boîtier électronique adapté pour émettre, lors de la réception d'un signal de requête d'identification de puissance supérieure à un seuil de détection prédéterminé, et à destination d'une unité centrale montée sur le véhicule, des signaux représentatifs de paramètres de fonctionnement de la dite roue comportant, en outre, un code d'identification de cette dernière. Selon l'invention, ce procédé de localisation consiste :
- à équiper le véhicule de deux antennes émettrices, une antenne latérale et une antenne frontale, disposées de façon à présenter des zones de couverture comportant une zone commune dans laquelle est située la roue à localiser,
- et à commander simultanément l'émission par les deux antennes émettrices de deux signaux de requête d'identification identiques en phase, de puissances adaptées pour obtenir, au niveau de la roue à localiser, un signal résultant de puissance supérieure au seuil de détection du boîtier électronique équipant ladite roue.

Il est à noter que dans l'intégralité de la présente demande, on entend définir classiquement :
- par « antenne latérale » une antenne positionnée au voisinage d'un des côtés longitudinaux du véhicule, entre la roue avant et la roue arrière correspondantes, et adaptée pour que sa zone de couverture englobe ces deux roues,
- par « antenne frontale » une antenne positionnée et adaptée pour que sa zone de couverture englobe les deux roues montées sur un essieu.

Le principe du concept de base de l'invention réside donc dans la commande de l'émission simultanée par deux antennes, de deux signaux de requête d'identification en phase, de sorte que le signal vu par le boîtier électronique équipant la roue à localiser consiste en la résultante (addition vectorielle) de ces deux signaux.

De ce fait, le procédé selon l'invention permet d'obtenir, sans aucun surcoût d'installation, tous les avantages procurés par la présence d'un élévateur de tension, et donc de fournir un procédé de localisation aussi performant qu'un procédé de localisation utilisant un tel élévateur de tension, sans avoir a en supporter le coût correspondant.

Un tel procédé de localisation peut , en outre constituer une des étapes d'un procédé général de localisation des roues d'un véhicule, et ainsi être associé à d'autres types de procédés de localisation dont la conception peut avantageusement varier en vue d'être adaptée au niveau d'équipement du véhicule.

Une première solution avantageuse de localisation des roues d'un véhicule consiste ainsi, selon l'invention, à décliner le concept de base de l'invention, de façon à localiser successivement, selon ce concept, toutes les roues du véhicule.

Selon ce principe, le procédé de localisation des roues d'un véhicule consiste avantageusement :
- à équiper le véhicule de quatre antennes émettrices consistant en deux antennes frontales, respectivement avant et arrière, et en deux antennes latérales, respectivement droite et gauche, positionnées de façon à former quatre paires d'antennes émettrices, respectivement "antenne avant / antenne droite" ,"antenne avant / antenne gauche", "antenne arrière / antenne droite", et "antenne arrière / antenne gauche", présentant chacune une zone de couverture comportant une zone commune dans laquelle s'étend une roue à localiser, respectivement roue avant droite, roue avant gauche, roue arrière droite, et roue arrière gauche ,
- et à commander successivement une émission simultanée et en phase des deux antennes émettrices d'au moins trois des quatre paires d'antennes de façon à identifier successivement chacune des roues correspondantes.

Ce premier procédé de localisation s'effectue moyennant l'installation de quatre antennes, mais autorise un positionnement relatif assez lointain des dites antennes par rapport aux roues sans toutefois nécessiter d'élévateur de tension grâce aux spécificités du concept de base de l'invention.

Par ailleurs, ce procédé requérant quatre antennes, on utilise avantageusement, en vue de sa mise oeuvre, les antennes d'un dispositif d'accès mains libres équipant le véhicule, adapté pour permettre d'accéder au dit véhicule et de démarrer ce dernier.

Une deuxième solution avantageuse de localisation des roues d'un véhicule permet de réduire à trois le nombre d'antennes émettrices.

A cet effet, le procédé de localisation consiste avantageusement :
- à équiper le véhicule de trois antennes consistant, d'une part en deux antennes latérales, respectivement antenne droite et antenne gauche, positionnées chacune à proximité d'une des deux roues, respectivement roue droite et roue gauche, d'un même essieu, et d'autre part en une antenne frontale positionnée à proximité de l'autre essieu, la dite antenne frontale et chaque antenne latérale présentant des zones de couverture comportant une zone commune dans laquelle est située une roue portée par l'essieu voisin de l'antenne frontale,
- à commander successivement l'émission par chacune des antennes latérales d'un signal de requête d'identification adapté pour présenter une puissance, d'une part supérieure au seuil de détection du boîtier électronique équipant la roue située à proximité de la dite antenne latérale, et d'autre part inférieure au seuil de détection des autres boîtiers électroniques, de façon à localiser successivement chacune des roues droite et gauche situées à proximité des dites antennes latérales,
- et à commander l'émission simultanée par une antenne latérale et l'antenne frontale,de deux signaux de requête d'identification identiques en phase, de puissances adaptées pour obtenir, au niveau de la roue située dans la zone commune des zones de couverture des dites antennes, un signal résultant de puissance supérieure au seuil de détection du boîtier électronique équipant ladite roue.

Cette réduction du nombre d'antennes est obtenue moyennant le positionnement des antennes latérales à proximité chacune d'une roue, de façon à permettre de « réveiller » cette roue par l'émission d'un signal en provenance de cette seule antenne sans nécessiter d'augmentation de puissance du dit signal.

A ces fins, une solution avantageuse consiste à intégrer les deux antennes latérales chacune dans un répétiteur de clignotant positionné à proximité d'une roue avant du véhicule, et à positionner l'antenne frontale à proximité de l'essieu arrière du dit véhicule.

Une troisième solution avantageuse de localisation des roues d'un véhicule permet de réduire à deux le nombre d'antennes émettrices.

A cet effet, le procédé de localisation consiste avantageusement :
- à équiper le véhicule, d'une part de deux antennes consistant en une antenne latérale et en une antenne frontale disposées de façon à présenter des zones de couverture comportant une zone commune dans laquelle est située une roue, et d'autre part de moyens d'alimentation des dites antennes comportant un élévateur de tension apte à permettre l'émission par chaque antenne de signaux présentant, au niveau de chaque roue située dans la zone de couverture de la dite antenne, une puissance supérieure au seuil de détection du boîtier électronique équipant la dite roue,
- à effectuer une première procédure de localisation d'une roue au cours de laquelle :
   - on alimente les deux antennes par l'intermédiaire de l'élévateur de tension,
   - on commande l'émission par une des deux antennes d'un signal de requête d'identification,
   - et on commande, simultanément à l'émission du signal de requête d'identification, l'émission, par l'autre antenne d'un signal parasite conçu pour brouiller le signal de requête d'identification,
- à effectuer une deuxième procédure de localisation d'une roue identique à la précédente et pour laquelle le rôle des deux antennes est inversé,
- et à effectuer une troisième procédure de localisation d'une roue effectuée sans élévateur de tension, au cours de laquelle on commande l'émission simultanée par les deux antennes de deux signaux de requête d'identification identiques en phase, de puissances adaptées pour obtenir, au niveau de la roue située dans la zone commue des zones de couverture des dites antennes, un signal résultant de puissance supérieure au seuil de détection du boîtier électronique équipant ladite roue.

Cette réduction du nombre d'antennes est obtenue moyennant la mise en oeuvre, en vue de la localisation de deux des roues, de procédures de localisation particulières nécessitant un élévateur de tension, et dont le caractère sélectif résulte du fait que, lors de l'émission d'un signal de requête d'identification par une antenne, ce signal ne peut être identifié que par le boîtier électronique de la roue d'une part la plus proche de la dite antenne, et d'autre part éloignée de l'autre antenne.

En effet, chacun des boîtiers électroniques équipant les roues reçoit un signal global composé d'une superposition du signal de requête d'identification émis par une antenne émettrice et du signal parasite émis par l'autre antenne.

Toutefois, concernant le boîtier électronique de la roue la plus proche de l'antenne émettant le signal de requête d'identification et éloignée de l'autre antenne, le signal de requête d'identification est prépondérant par rapport au signal parasite résiduel. Par conséquent, le signal global reçu présente la forme générale du signal de requête d'identification, et est donc identifié comme étant ce signal de requête, entraînant l'émission en réponse d'un signal comportant le code d'identification de la roue.

Les autres boîtiers électroniques reçoivent, quant à eux, un signal global dans lequel le signal parasite est prépondérant par rapport au signal résiduel de requête d'identification ou comportant un signal de requête d'identification trop affaibli pour être détecté. De ce fait, le signal global n'est pas identifiable par les dits boîtiers qui n'émettent donc aucun signal en réponse.

Par ailleurs, de façon avantageuse selon ce mode de réalisation de l'invention, l'unité centrale commande l'émission de signaux de requête d'identification consistant en des signaux codés « Manchester ».

L'invention s'étend à des dispositifs de localisation tels que définis dans les revendications de « dispositif » de la présente demande, destinés à la mise en oeuvre du procédé de base selon l'invention de localisation d'une roue de véhicule, et des procédés généraux conformes à l'invention de localisation des roues d'un véhicule.

D'autres caractéristiques buts et avantages de l'invention ressortiront de la description détaillée qui suit en référence aux dessins annexés qui en représentent à titre d'exemples non limitatifs trois modes de réalisation préférentiels. Sur ces dessins :
- la figure 1 est une vue de dessus schématique d'un véhicule doté d'un système de surveillance associé à une première variante de dispositif selon l'invention de localisation des roues du dit véhicule,
- la figure 2 est un schéma illustrant le procédé de localisation d'une roue mis en oeuvre selon l'invention,
- les figures 3a à 3c sont trois vues de dessus schématiques similaires à celle de la figure 1, illustrant les trois étapes de localisation mises en oeuvre par le dispositif de localisation représenté à cette figure 1 en vue de la localisation des quatre roues du véhicule,
- la figure 4 est une vue de dessus schématique d'un véhicule doté d'un système de surveillance associé à une deuxième variante de dispositif selon l'invention de localisation des roues du dit véhicule,
- la figure 5 est une vue de dessus schématique d'un véhicule doté d'un système de surveillance associé à une troisième variante de dispositif selon l'invention de localisation des roues du dit véhicule,
- et les figures 6a à 6c sont trois vues de dessus schématiques similaires à celle de la figure 5, illustrant les trois étapes de localisation mises en oeuvre par le dispositif de localisation représenté à cette figure 5 en vue de la localisation des quatre roues du véhicule.

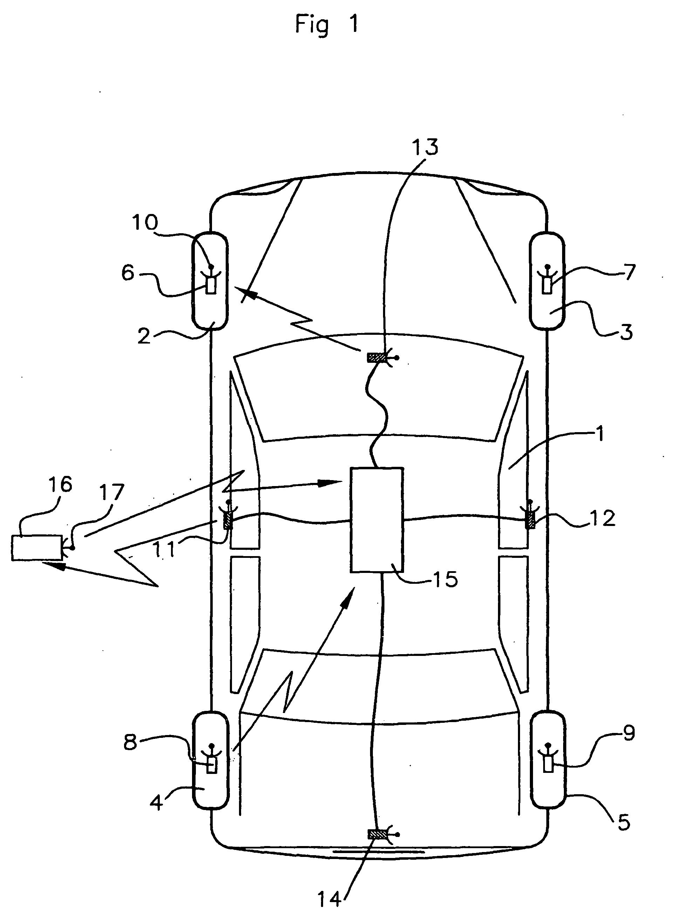

Les dispositifs de localisation selon l'invention représentés à titre d'exemple respectivement aux figures 1, 4, et 5 sont destinés à la localisation de la position de roues d'un véhicule.

Ces dispositifs de localisation sont plus spécifiquement destinés à être intégrés dans un système de surveillance tel que celui, représenté aux figures 1, 4, et 5, équipant un véhicule 1 muni de quatre roues chaussées classiquement d'un pneumatique : deux roues avant 2, 3 et deux roues arrière 4, 5.

De tels systèmes de surveillance comportent classiquement, en premier lieu, associé à chaque roue 2-5, un boîtier électronique 6-9, par exemple solidarisé sur la jante de la dite roue de façon à être positionné à l'intérieur de l'enveloppe du pneumatique.

Chacun de ces boîtiers électroniques 6-9 intègre par exemple des capteurs dédiés à la mesure de paramètres, tels que pression et/ou température du pneumatique, connectés à un microprocesseur possédant un code d'identification du dit boîtier, et relié à un émetteur RF connecté à une antenne telle que 10 basse fréquence.

Le système de surveillance comprend, également, un calculateur centralisé ou unité centrale 15 comportant un microprocesseur et intégrant un récepteur RF apte à recevoir les signaux émis par chacun des quatre boîtiers électroniques 6-9.

De façon usuelle, un tel système de surveillance et notamment son unité centrale 15 sont conçus de façon à informer le conducteur de toute variation anormale des paramètres mesurés par les capteurs associés aux roues 2-5.

Les dispositifs de localisation selon l'invention comprennent, quant à eux, classiquement des antennes émettrices connectées à l'unité centrale 15 et destinées à émettre des signaux de requête d'identification à réception desquels chaque boîtier électronique réveillé, c'est-à-dire chaque boîtier électronique recevant un signal de requête d'identification de puissance supérieure à un seuil de détection prédéterminé, est adapté pour émettre en réponse un signal comportant notamment son code d'identification.

Selon le dispositif de localisation représenté à la figure 1, ces antennes émettrices 11-14 sont constituées d'antennes d'un dispositif usuellement connu sous l'appellation « dispositif d'accès mains libres », adapté pour permettre d'accéder au véhicule 1 et éventuellement de démarrer ce dernier grâce à l'identification d'un badge électronique 16.

Conformément aux dispositions d'un tel dispositif d'accès mains libres, ces antennes sont au nombre de quatre et consistent respectivement en :
- une antenne gauche 11 positionnée sur la poignée de la porte avant gauche du véhicule,
- une antenne droite 12 positionnée sur la poignée de la porte avant droite du véhicule,
- une antenne avant 13 positionnée au niveau du tableau de bord du véhicule,
- et une antenne arrière 14 positionnée sur la poignée de la porte du coffre du véhicule.

Bien évidemment, le positionnement exact de ces antennes peut varier en fonction du véhicule.

Le badge électronique 16 de ce système d'accès mains libres comprend, quant à lui, classiquement un calculateur intégrant un récepteur basse fréquence « LF » et un émetteur radio fréquence « RF » connectés à une antenne telle que 17.

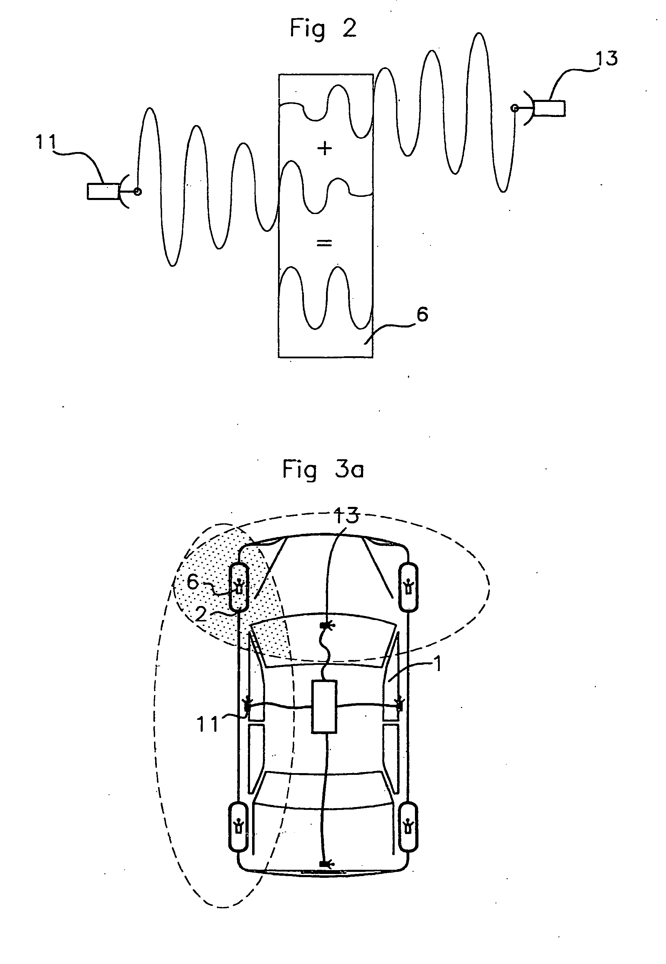

Ce dispositif de localisation est conçu pour scinder la procédure de localisation en trois étapes successives permettant chacune de localiser une des roues (roues 2 puis 3 puis 5 selon les figures 3a à 3c) par la mise en oeuvre du procédé de localisation d'une roue objet de la présente invention.

A cet effet, et en premier lieu et de façon classique :
- l'antenne gauche 11 présente une zone de couverture englobant les deux roues latérales gauche 2, 4,
- l'antenne droite 12 présente une zone de couverture englobant les deux roues latérales droite 3, 5,
- l'antenne avant 13 présente une zone de couverture englobant les deux roues avant 2, 3,
- et l'antenne arrière 14 présente une zone de couverture englobant les deux roues latérales arrière 4, 5.

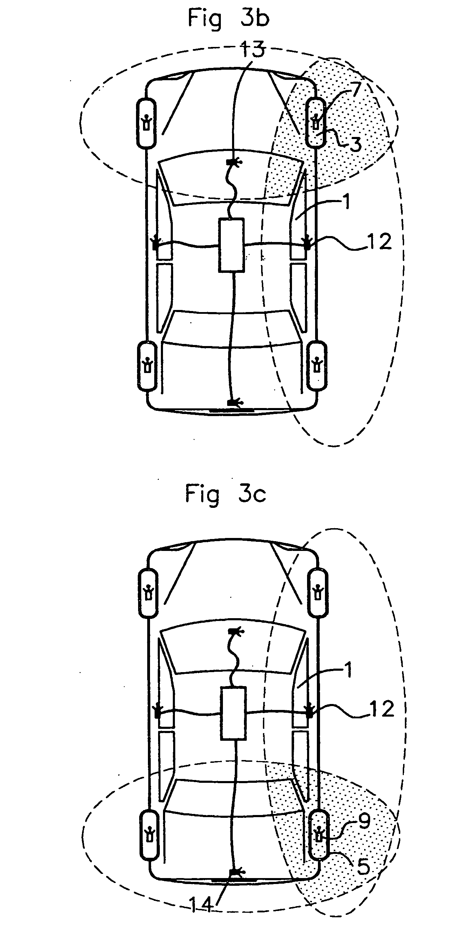

Ainsi, tel que cela ressort notamment des figures 3a à 3c :
- l'antenne gauche 11 et l'antenne avant 13 présentent des zones de couverture comportant une zone commune dans laquelle est située la roue avant gauche 2 (figure 3a),
- l'antenne droite 12 et l'antenne avant 13 présentent des zones de couverture comportant une zone commune dans laquelle est située la roue avant droite 3 (figure 3b),
- l'antenne droite 12 et l'antenne arrière 14 présentent des zones de couverture comportant une zone commune dans laquelle est située la roue arrière droite 5 (figure 3c),
- et l'antenne gauche 11 et l'antenne arrière 14 présentent des zones de couverture comportant une zone commune dans laquelle est située la roue arrière gauche 4 (non représenté).

De plus, selon le procédé de l'invention et tel qu'illustré à la figure 2, en vue de la localisation d'une roue (roue 2 équipée du boîtier électronique 6 selon la figure 2), l'unité centrale 15 commande l'émission par les deux antennes présentant une zone de couverture commune dans laquelle est située la dite roue (antennes 11 et 13 à la figure 2), de deux signaux de requête d'identification identiques :
- présentant, au niveau de la roue 2, une puissance inférieure au seuil de détection du boîtier électronique 6,
- émis simultanément et en phase de façon à obtenir, au niveau de la roue 2, un signal résultant de puissance supérieure au seuil de détection du boîtier électronique 6.

Ainsi, tel que précité, l'activation simultanée et en phase de la paire d'antennes, "antenne gauche 11 / antenne avant 13" permet, tel que représenté aux figures 2 et 3a, de localiser la roue avant gauche 2.

De même, l'activation simultanée et en phase de la paire d'antennes, "antenne droite 12 / antenne avant 13" permet, tel que représenté à la figure 3b, de localiser la roue avant droite 3.

Enfin, l'activation simultanée et en phase de la paire d'antennes, "antenne droite 12 / antenne arrière 14" permet, tel que représenté à la figure 3c, de localiser la roue arrière droite 5.

La localisation de la dernière roue, roue arrière gauche 4 en l'exemple, se déduit enfin des trois localisations précitées.

Il est à noter que, de façon évidente, la combinaison de trois roues localisées selon le procédé de l'invention peut différer de la combinaison précitée.

De plus, une quatrième étape mise en oeuvre en utilisant la paire d'antennes non utilisée lors des trois étapes précédentes ("antenne gauche 11 / antenne arrière 14" selon l'exemple ci-dessus) peut servir à la localisation de la quatrième roue (roue arrière gauche 4 selon l'exemple ci-dessus).

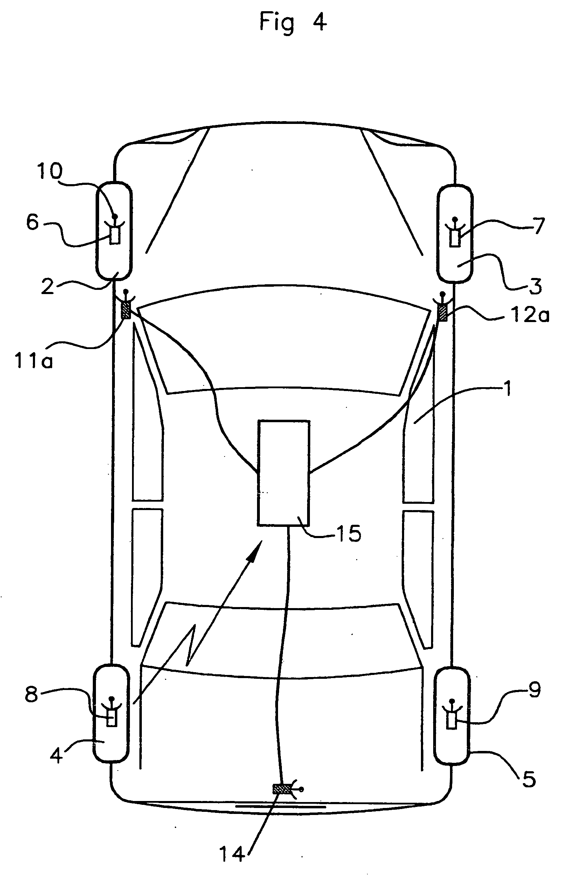

Selon la deuxième variante de dispositif de localisation représentée à la figure 4, les antennes émettrices sont au nombre de trois et consistent en :
- une antenne gauche 11a positionnée dans le répétiteur de clignotant gauche du véhicule 1, par conséquent à proximité de la roue avant gauche 2 du dit véhicule,
- une antenne droite 12a positionnée dans le répétiteur de clignotant droit du véhicule 1, par conséquent à proximité de la roue avant gauche 2 du dit véhicule,
- et une antenne arrière 14 positionnée sur la poignée de la porte du coffre du véhicule 1 et donc identique à celle du dispositif de localisation représenté à la figure 1.

Selon ce mode de réalisation, l'émission par une des antennes gauche 11 a ou droite 12a d'un signal de requête d'identification de puissance similaire à celle des signaux émis par les antennes du premier mode de réalisation ci-dessus, est suffisante pour « réveiller » le boîtier électronique 6, 7 de la roue avant 2, 3 voisine, du fait de la proximité des répétiteurs par rapport à la dite roue avant.

La troisième roue, roue arrière 4 ou 5, est quant à elle localisée par la mise en oeuvre du procédé de localisation d'une roue conforme à l'invention, en commandant l'émission par l'antenne arrière 14 et l'une des antennes gauche 11a ou droite 12a de signaux de requête d'identification émis simultanément et en phase.

Les deux dispositifs de localisation ci-dessus décrits en référence notamment aux figures 1 et 4 présentent en commun l'avantage de pouvoir fonctionner avec de faibles puissances d'émission des signaux de requête d'identification, et donc de ne pas nécessiter la présence d'un élévateur de tension.

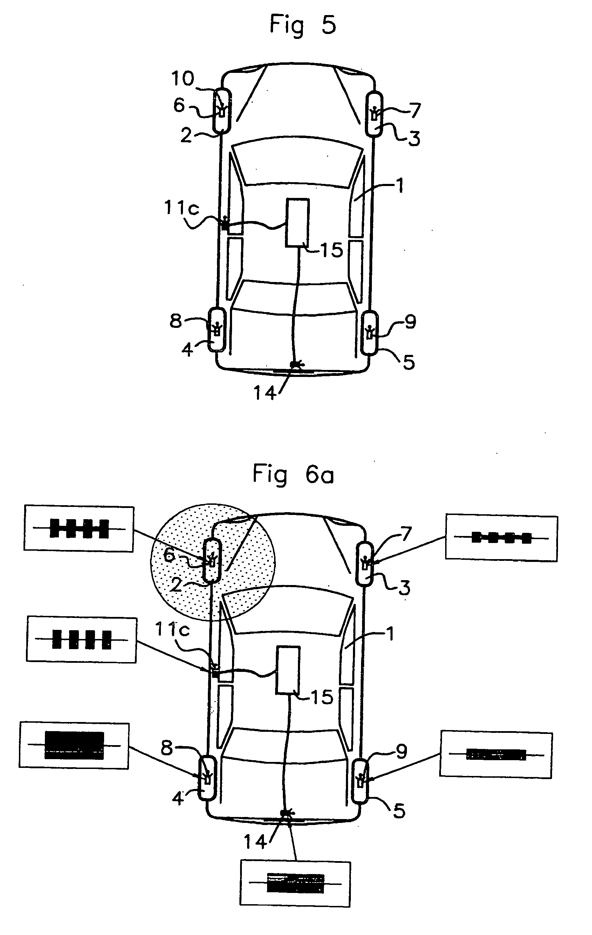

Selon la troisième variante de dispositif de localisation représentée à la figure 5, les antennes émettrices sont au nombre de deux et consistent en :
- une antenne gauche 11 c positionnée sur la poignée de la porte avant gauche du véhicule 1, et donc identique à l'antenne 11 du dispositif de localisation représenté à la figure 1.
- et une antenne arrière 14 positionnée sur la poignée de la porte du coffre du véhicule 1 et donc identique à l'antenne 14 du dispositif de localisation représenté à la figure 1.

Ce dispositif de localisation met en oeuvre, en premier lieu, un procédé de localisation spécifique nécessitant un élévateur de tension afin que les signaux de requête d'identification émis par l'antenne gauche 11a et respectivement l'antenne arrière 14, présentent une puissance suffisante pour « réveiller » les boîtiers électroniques 6, 8 des deux roues gauche 2, 4, et respectivement les boîtiers électroniques 8, 9 des deux roues arrière 4, 5.

Ce procédé de localisation se subdivise en deux sous étapes similaires permettant chacune de localiser une roue, et consistant pour la première sous étape, tel que représenté à la figure 6a, à commander:
- l'émission, par une des deux antennes émettrices, antenne gauche 11c selon la figure 6a, d'un signal de requête d'identification,
- simultanément à l'émission du signal de requête d'identification, l'émission par l'autre antenne émettrice, antenne arrière 14 selon la figure 6a, d'un signal parasite conçu pour brouiller le signal de requête d'identification, et pour rendre non identifiable ce dernier.

Selon cette procédure, seule la roue avant gauche 2 reçoit un signal de requête d'identification identifiable par le boîtier électronique 6 équipant cette roue 2.

En effet, cette roue 2 reçoit un signal global composé de façon prépondérante par le signal de requête d'identification, et assimilable à ce dernier.

Par contre, la roue arrière gauche 4 située dans la zone commune des zones de couverture des deux antennes 11 c, 14 reçoit un signal global composé à parts équivalentes du signal de requête d'identification et du signal parasite, par conséquent non identifiable.

La roue arrière droite 5 reçoit, quant à elle, un signal global composé de façon prépondérante du signal parasite, et donc non identifiable.

Enfin, la roue avant droite 3 reçoit un signal global composé de façon prépondérante du signal de requête d'identification, mais présentant une puissance inférieure au seuil de détection du boîtier électronique 7 équipant cette roue 3.

Cette première sous étape permet donc de localiser la roue avant gauche 2 du véhicule 1.

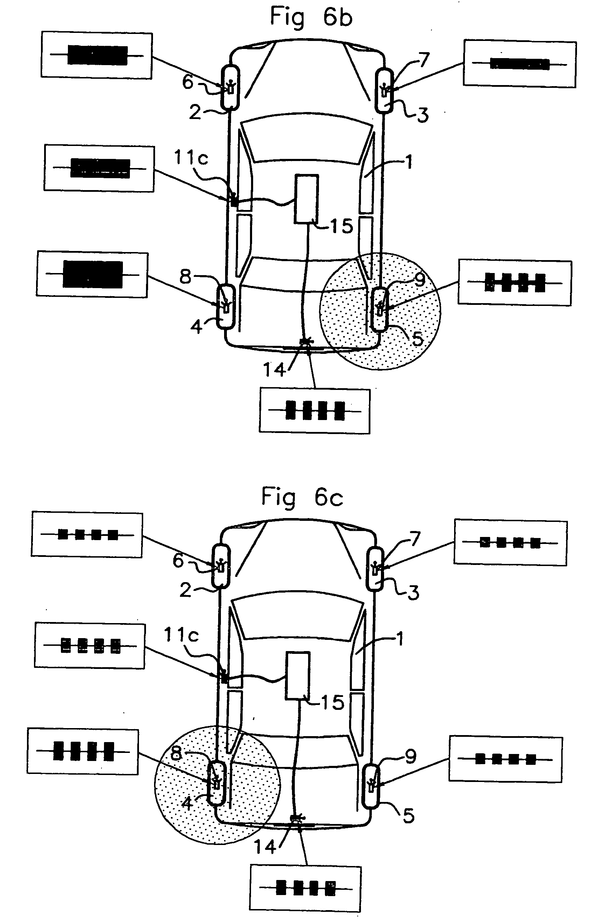

La seconde sous étape est similaire à la première sous étape ci-dessus décrite, avec, tel que représenté à la figure 6b, inversion du rôle des deux antennes 11 c, 14 : émission d'un signal de requête d'identification par l'antenne arrière 14, et simultanément, émission par l'antenne gauche 11 c d'un signal parasite conçu pour brouiller le signal de requête d'identification.

Selon cette procédure, seule la roue arrière droite 5 reçoit un signal de requête d'identification identifiable par le boîtier électronique 9 équipant cette roue 5.

En effet, cette roue 5 reçoit un signal global composé de façon prépondérante par le signal de requête d'identification, et assimilable à ce dernier.

Par contre, la roue arrière gauche 4 située dans la zone commune des zones de couverture des deux antennes 11 c, 14 reçoit un signal global composé à parts équivalentes du signal de requête d'identification et du signal parasite, par conséquent non identifiable.

La roue avant gauche 2 reçoit, quant à elle, un signal global composé de façon prépondérante du signal parasite, et donc non identifiable.

Enfin, la roue avant droite 3 reçoit un signal global de faible puissance composé, en outre, de façon prépondérante du signal parasite.

Cette seconde sous étape permet donc de localiser la roue arrière droite 5 du véhicule 1.

Par ailleurs, concernant ces deux sous étapes de localisation et tel que représenté aux figures 6a et 6b, les signaux de requête d'identification consistent en des signaux codés « Manchester ».

Les signaux parasites conçus pour brouiller ces signaux de requête d'identification consistent, quant à eux, tel que représenté aux figures 6a et 6b, en des signaux comportant une portion de signal modulé de longueur au moins égale à celle du « code Manchester ».

En dernier lieu, selon ce troisième mode de réalisation, la troisième roue, roue arrière gauche 4 en l'exemple, est quant à elle localisée par la mise en oeuvre du procédé de localisation d'une roue conforme à l'invention, en commandant, tel que représenté à la figure 6c, une émission simultanée et en phase, par les deux antennes 11 c et 14, de signaux de requête d'identification d'une puissance inférieure au seuil de détection des boîtiers électroniques 5-9.

Selon le principe de l'invention et tel que représenté à la figure 6c, seul le boîtier électronique 8 de la roue arrière gauche 4 reçoit un signal résultant de requête d'identification présentant une puissance supérieure au seuil de détection du dit boîtier électronique, apte à « réveiller » ce dernier.

La localisation du dernier boîtier (7) est déterminé par déduction.

## Revendications

1. Procédé de localisation de la position d'une roue (2) d'un véhicule (1) équipée d'un boîtier électronique (6) adapté pour émettre, lors de la réception d'un signal de requête d'identification de puissance supérieure à un seuil de détection prédéterminé, et à destination d'une unité centrale (15) montée sur le véhicule (1), des signaux représentatifs de paramètres de fonctionnement de la dite roue comportant, en outre, un code d'identification de cette dernière, le dit procédé de localisation consistant :
• à équiper le véhicule (1) de deux antennes émettrices, une antenne latérale (11) et une antenne frontale (13), disposées de façon à présenter des zones de couverture comportant une zone commune dans laquelle est située la roue (2) à localiser, et étant **caractérisé en ce qu'**il consiste à commander simultanément l'émission par les deux antennes émettrices (11, 13) de deux signaux de requête d'identification identiques en phase, de puissances adaptées pour obtenir, au niveau de la roue (2) à localiser, un signal résultant de puissance supérieure au seuil de détection du boîtier électronique (6) équipant ladite roue.

2. Procédé selon la revendication 1 de localisation des roues (2-5) d'un véhicule (1), **caractérisé en ce que** :
• on équipe le véhicule (1) de quatre antennes émettrices (11-14) consistant en deux antennes frontales, respectivement avant (13) et arrière (14), et en deux antennes latérales, respectivement droite (12) et gauche (11), positionnées de façon à former quatre paires d'antennes émettrices, respectivement "antenne avant (13) / antenne droite" (12), "antenne avant (13) / antenne gauche (11)", "antenne arrière (14) / antenne droite (12)", et "antenne arrière (14) / antenne gauche (11)", présentant chacune une zone de couverture comportant une zone commune dans laquelle s'étend une roue (2-5) à localiser, respectivement roue avant droite (3), roue avant gauche (2), roue arrière droite (5), et roue arrière gauche (4),
• et on commande successivement une émission simultanée et en phase de deux antennes émettrices d'au moins trois des quatre paires d'antennes (12-13, 11-13, 12-14, 11-14) de façon à identifier successivement chacune des roues (2-5) correspondantes.

3. Procédé de localisation selon la revendication 2 **caractérisé en ce que** l'on utilise les antennes (11-14) d'un dispositif d'accès mains libres équipant le véhicule (1), adapté pour permettre d'accéder au dit véhicule et de démarrer ce dernier.

4. Procédé selon la revendication 1 de localisation des roues (2-5) d'un véhicule (1), **caractérisé en ce que** :
• on équipe le véhicule (1) de trois antennes (11a, 12a, 14) consistant, d'une part en deux antennes latérales, respectivement antenne droite (12a) et antenne gauche (11a), positionnées chacune à proximité d'une des deux roues, respectivement roue droite (3) et roue gauche (2), d'un même essieu, et d'autre part en une antenne frontale (14) positionnée à proximité de l'autre essieu, la dite antenne frontale et chaque antenne latérale (11a, 12a) présentant des zones de couverture comportant une zone commune dans laquelle est située une roue (4, 5) portée par l'essieu voisin de l'antenne frontale (14),
• on commande successivement l'émission par chacune des antennes latérales (11a, 12a) d'un signal de requête d'identification adapté pour présenter une puissance, d'une part supérieure au seuil de détection du boîtier électronique (6, 7) équipant la roue (2, 3) située à proximité de la dite antenne latérale, et d'autre part inférieure au seuil de détection des autres boîtiers électroniques, de façon à localiser successivement chacune des roues droite (3) et gauche (2) situées à proximité des dites antennes latérales,
• et on commande l'émission simultanée par des antennes latérales (11a, 12a) et l'antenne frontale (14), de deux signaux de requête d'identification identiques en phase, de puissances adaptées pour obtenir, au niveau de la roue (4, 5) située dans la zone commune des zones de couverture des dites antennes, un signal résultant de puissance supérieure au seuil de détection du boîtier électronique (8) équipant ladite roue.

5. Procédé de localisation selon la revendication 4 **caractérisé en ce que** l'on intègre les deux antennes latérales (11a, 12a) chacune dans un répétiteur de clignotant positionné à proximité d'une roue avant (2, 3) du véhicule (1), et **en ce que** l'on positionne l'antenne frontale (14) à proximité de l'essieu arrière du dit véhicule.

6. Procédé selon la revendication 1 de localisation des roues (2-5) d'un véhicule (1), **caractérisé en ce que** :
• on équipe le véhicule (1), d'une part de deux antennes consistant en une antenne latérale (11c) et en une antenne frontale (14) disposées de façon à présenter des zones de couverture comportant une zone commune dans laquelle est située une roue (4), et d'autre part de moyens d'alimentation des dites antennes comportant un élévateur de tension apte à permettre l'émission par chaque antenne (11 c, 14) de signaux présentant , au niveau de chaque roue située dans la zone de couverture de la dite antenne, une puissance supérieure au seuil de détection du boîtier électronique équipant la dite roue,
• on effectue une première procédure de localisation d'une roue au cours de laquelle :
- on alimente les deux antennes (11c, 14) par l'intermédiaire de l'élévateur de tension,
- on commande l'émission par une des deux antennes (11 c) d'un signal de requête d'identification,
- et on commande, simultanément à l'émission du signal de requête d'identification, l'émission, par l'autre antenne (14) d'un signal parasite conçu pour brouiller le signal de requête d'identification,
• on effectue une deuxième procédure de localisation d'une roue identique à la précédente et pour laquelle le rôle des deux antennes (11c, 14) est inversé,
• et on efectue une troisième procédure de localisation d'une roue effectuée sans élévateur de tension, au cours de laquelle on commande l'émission simultanée par les deux antennes (11c, 14) de deux signaux de requête d'identification identiques en phase, de puissances adaptées pour obtenir, au niveau de la roue (4) située dans la zone commune des zones de couverture des dites antennes, un signal résultant de puissance supérieure au seuil de détection du boîtier électronique (8) équipant ladite roue.

7. Procédé de localisation selon la revendication 6 **caractérisé en ce que** l'on commande l'émission de signaux de requête d'identification consistant en des signaux codés « Manchester ».

8. Dispositif de localisation de la position d'une roue (2) d'un véhicule (1) équipée d'un boîtier électronique (6) adapté pour émettre, lors de la réception d'un signal électromagnétique de requête d'identification de puissance supérieure à un seuil de détection prédéterminé, et à destination d'une unité centrale (15) montée sur le véhicule (1), des signaux représentatifs de paramètres de fonctionnement de la dite roue comportant, en outre, un code d'identification de cette dernière, le dit dispositif de localisation comprenant :
• deux antennes émettrices (11, 13), une antenne latérale (11) et une antenne frontale (13), disposées de façon à présenter des zones de couverture comportant une zone commune dans laquelle est située la roue (2) à localiser,
et étant **caractérisé en ce qu'**il comprend une unité centrale (15) mettant en oeuvre une procédure de localisation consistant à commander simultanément l'émission par les deux antennes émettrices (11, 13) de deux signaux de requête d'identification identiques en phase, de puissances adaptées pour obtenir, au niveau de la roue (2) à localiser, un signal résultant de puissance supérieure au seuil de détection du boîtier électronique (6) équipant ladite roue.

9. Dispositif selon la revendication 8 de localisation des roues d'un véhicule, **caractérisé en ce que** :
• il comprend quatre antennes émettrices (11-14) consistant en deux antennes frontales, respectivement avant (13) et arrière (14), et en deux antennes latérales, respectivement droite (12) et gauche (11), positionnées de façon à former quatre paires d'antennes émettrices, respectivement, "antenne avant (13) / antenne droite (12)", "antenne avant (13) / antenne gauche (11)", "antenne arrière (14) / antenne droite (12)", et "antenne arrière (14) / antenne gauche (11)", présentant chacune une zone de couverture comportant une zone commune dans laquelle s'étend une roue (2-5) à localiser, respectivement roue avant droite (3), roue avant gauche (2), roue arrière droite (5), et roue arrière gauche (4),
• l'unité centrale (15) commande successivement une émission simultanée et en phase des deux antennes émettrices d'au moins trois des quatre paires d'antennes (12-13, 11-13, 12-14, 11-14), de façon à identifier successivement chacune des roues correspondantes.

10. Dispositif de localisation selon la revendication 9 **caractérisé en ce que** les antennes émettrices (11-14) sont constituées des antennes d'un dispositif mains libres équipant le véhicule (1), adapté pour permettre d'accéder au dit véhicule et de démarrer ce dernier.

11. Dispositif selon la revendication 8 de localisation des roues d'un véhicule (1), **caractérisé en ce que** :
• il comprend trois antennes (11a, 12a, 14) consistant, d'une part en deux antennes latérales, respectivement antenne droite (12a) et antenne gauche (11a), positionnées chacune à proximité d'une des deux roues, respectivement roue droite (3) et roue gauche (2), d'un même essieu, et d'autre part en une antenne frontale (14) positionnée à proximité de l'autre essieu, la dite antenne frontale et chaque antenne latérale (11a, 12a) présentant des zones de couverture comportant une zone commune dans laquelle est située une roue (4, 5) portée par l'essieu voisin de l'antenne frontale (14),
• l'unité centrale (15) met en oeuvre une première procédure de localisation consistant à commander successivement l'émission par chacune des antennes latérales (11a, 12a) d'un signal de requête d'identification adapté pour présenter une puissance, d'une part supérieure au seuil de détection du boîtier électronique (6, 7) équipant la roue (2, 3) située à proximité de la dite antenne latérale, et d'autre part inférieure au seuil de détection des autres boîtiers électroniques, de façon à localiser successivement chacune des roues droite (3) et gauche (2) situées à proximité des dites antennes latérales,
• et l'unité centrale (15) met en oeuvre une seconde procédure de localisation consistant à commander l'émission simultanée par une antenne latérale (11 a) et l'antenne frontale (14), de deux signaux de requête d'identification identiques en phase, de puissances adaptées pour obtenir, au niveau de la roue (4) située dans la zone commune des zones de couverture des dites antennes, un signal résultant de puissance supérieure au seuil de détection du boîtier électronique (8) équipant ladite roue.

12. Dispositif de localisation selon la revendication 11 **caractérisé en ce que** les deux antennes latérales (11a, 12a) sont intégrés chacune dans un répétiteur de clignotant positionné à proximité d'une roue avant (2, 3) du véhicule (1), et **en ce que** l'antenne frontale (14) est positionnée à proximité de l'essieu arrière du dit véhicule.

13. Dispositif selon la revendication 8 de localisation des roues d'un véhicule (1), **caractérisé en ce que** :
• il comprend, d'une part deux antennes (11c, 14) consistant en une antenne latérale (11c) et en une antenne frontale (14) disposées de façon à présenter des zones de couverture comportant une zone commune dans laquelle est située une roue (4), et d'autre part des moyens d'alimentation des dites antennes comportant un élévateur de tension apte à permettre l'émission par chaque antenne (11c, 14) de signaux présentant , au niveau de chaque roue située dans la zone de couverture de la dite antenne, une puissance supérieure au seuil de détection du boîtier électronique équipant la dite roue,
• l'unité centrale (15) met en oeuvre une première procédure de localisation d'une roue consistant à commander :
- l'alimentation des deux antennes (11c, 14) par l'intermédiaire de l'élévateur de tension,
- l'émission par une des deux antennes (11 c) d'un signal de requête d'identification,
- et, simultanément à l'émission du signal de requête d'identification, l'émission, par l'autre antenne (14) d'un signal parasite conçu pour brouiller le signal de requête d'identification,
• l'unité centrale (15) met en oeuvre une deuxième procédure de localisation d'une roue identique la précédente et pour laquelle le rôle des deux antennes (11c, 14) est inversé,
• et l'unité centrale (15) met en oeuvre une troisième procédure de localisation d'une roue effectuée sans élévateur de tension, au cours de laquelle on commande l'émission simultanée par les deux antennes (11c, 14) de deux signaux de requête d'identification identiques en phase, de puissances adaptées pour obtenir, au niveau de la roue (4) située dans la zone commune des zones de couverture des dites antennes, un signal résultant de puissance supérieure au seuil de détection du boîtier électronique (8) équipant la dite roue.

## Claims

1. Method for localisation of the position of a wheel (2) of a vehicle (1) equipped with an electronic box (6) adapted for transmitting - upon receiving an identification request signal whose power is greater than a predetermined detection threshold - signals representing operational parameters of said wheel comprising, further, an identification code for the latter, and directed at a central unit (15) mounted on the vehicle (1), said localisation method consisting of:
• equipping the vehicle (1) with two transmitting antennas - a lateral antenna (11) and a frontal antenna (13) - placed so as to have coverage zones comprising a common zone in which the wheel (2) to be localised is located and being **characterised in that** it consists of:
• simultaneously ordering the transmission by the two transmitting antennas (11, 13) of two identical, in-phase, identification request signals whose power is adapted for obtaining-in the area of the wheel (2) to be localised-a resulting signal whose power is greater than the detection threshold of the electronic box (6) equipping said wheel.

2. Method according to claim 1 for localisation of the wheels (2-5) of a vehicle (1), **characterised in that**
• the vehicle (1) is equipped with four transmitting antennas (11-14) consisting of two frontal antennas, respectively forward (13) and rear (14), and two lateral antennas, respectively right (12) and left (11), positioned so as to form four pairs of transmitting antennas, respectively "front antenna (13)/right antenna (12)", "front antenna (13)/left antenna (11)", "rear antenna (14)/right antenna (12)" and "rear antenna (14)/left antenna (11)", wherein each has a coverage zone comprising a common zone in which extends a wheel (2-5) to be localised, respectively right front wheel (3), left front wheel (2), right rear wheel (5), and left rear wheel (4),
• and a simultaneous and in phase transmission by two transmitting antennas from at least three of the four antenna pairs (12-13, 11-13, 12-14 and 11-14) so as to identify successively each of the corresponding wheels (2-5) is successively ordered.

3. Localisation method according to claim 2, **characterised in that** the antennas (11-14) of a hands-free access device equipping the vehicle (1) - adapted to enable access to said vehicle and to start the latter - are used.

4. Method according to claim 1 for localisation of the wheels (2-5) of a vehicle (1), **characterised in that**
• the vehicle (1) is equipped with three antennas (11a, 12a, and 14) consisting firstly of two lateral antennas, respectively right antenna (12a) and left antenna (11a), each positioned near one of the two wheels, respectively right wheel (3) and left wheel (2), of a single axle, and secondly one frontal antenna (14) positioned near the other axle, wherein said frontal antenna and each lateral antenna (11a and 12a) have coverage zones comprising a common zone in which is located one wheel (4 and 5) mounted on the axle neighbouring the frontal antenna (14),
• the transmission by each of the lateral antennas (11a and 12a) of an identification request signal adapted to have a power both greater than the detection threshold of the electronic box (6 and 7) equipping the wheel (2 and 3) located near said lateral antenna and also less than the detection threshold of the other electronic boxes, so as to successively localise each of the right (3) and left (2) wheels located near said lateral antennas is successively ordered,
• and the simultaneous transmission by lateral antennas (11a and 12a) and the frontal antenna (14) of two identical, in-phase, identification request signals whose power is adapted for obtaining - in the area of the wheel (4 and 5) located in the common zone of the coverage zones of said antennas - a resulting signal whose power is greater than the detection threshold of the electronic box (8) equipping said wheel is ordered.

5. Localisation method according to claim 4, **characterised in that** the two lateral antennas (11a and 12a) are each integrated in an indicator repeater positioned near a front wheel (2 and 3) of the vehicle (1), and **in that** the frontal antenna (14) is positioned near the rear axle of said vehicle.

6. Method according to claim 1 for localisation of the wheels (2-5) of a vehicle (1), **characterised in that**
• the vehicle (1) is equipped firstly with two antennas consisting of a lateral antenna (11c) and a frontal antenna (14) placed so as to have coverage zones comprising one common zone in which one wheel (4) is located and secondly a power supply means for said antennas comprising a step-up transformer enabling the transmission by each antenna (11c and 14) of signals having in the area of each wheel located in the coverage zone of said antenna a power greater than the detection threshold of the electronic box with which said wheel is equipped,
• a first localisation procedure for one wheel is performed during which:
- the two antennas (11c and 14) are supplied by means of the step-up transformer,
- the transmission by one of the two antennas (11c) of an identification request signal is ordered,
- and simultaneously with the transmission of the identification request signal, transmission by the other antenna (14) of an interference signal designed to jam the identification request signal is ordered,
• a second localisation procedure for a wheel identical to the previous one and for which the role of the two antennas (11c and 14) is reversed is performed,
• and a third localisation procedure for a wheel is performed without step-up transformer, during which the simultaneous transmission by the two antennas (11c and 14) of two identical, in phase identification request signals of powers adapted for obtaining, in the area of the wheel (4) located in the common zone of the coverage zones of said antennas, a resulting signal of power greater than the detection threshold of the electronic box (8) equipping said wheel is ordered.

7. Localisation method according to claim 6, **characterised in that** the transmission of identification request signals consisting of "Manchester" coded signals is ordered.

8. Device for localisation of the position of a wheel (2) of a vehicle (1) equipped with an electronic box (6) adapted for transmitting-upon receiving an electromagnetic identification request signal whose power is greater than a predetermined detection threshold-signals representing operational parameters of said wheel comprising, further, an identification code for the latter, and directed at a central unit mounted (15) on the vehicle (1), said localisation device comprising:
• two transmitting antennas (11 and 13) - a lateral antenna (11) and a frontal antenna (13) - placed so as to have coverage zones comprising a common zone in which the wheel (2) to be localised is located, and being **characterised in that** it comprises
• a central unit (15) implementing a localisation procedure consisting in simultaneously ordering the transmission by the two transmitting antennas (11 and 13) of two identical, in-phase, identification request signals whose powers are adapted for obtaining - in the area of the wheel (2) to be localised - a resulting signal whose power is greater than the detection threshold of the electronic box (6) equipping said wheel.

9. Device according to claim 8 for localisation of the wheels of a vehicle, **characterised in that**:
• it includes four transmitting antennas (11-14) consisting of two frontal antennas, respectively forward (13) and rear (14), and two lateral antennas, respectively right (12) and left (11), positioned so as to form four pairs of transmitting antennas, respectively "front antenna (13)/right antenna (12)", "front antenna (13)/left antenna (11)", "rear antenna (14)/right antenna (12)" and "rear antenna (14)/left antenna (11)", wherein each has a coverage zone comprising a common zone in which extends a wheel (2-5) to be localised, respectively right front wheel (3), left front wheel (2), right rear wheel (5), and left rear wheel (4),
• the central unit (15) successively orders a simultaneous and in phase transmission by the two transmitting antennas from at least three of the four antenna pairs (12-13, 11-13, 12-14 and 11-14) so as to identify successively each of the corresponding wheels.

10. Localisation device according to claim 9, **characterised in that** the transmitting antennas (11-14) are made up from the antennas of a hands-free device equipping the vehicle (1)-adapted to enable access to said vehicle and to start the latter.

11. Device according to claim 8 for localisation of the wheels of a vehicle (1), **characterised in that**:
• it includes three antennas (11a, 12a, and 14) consisting firstly of two lateral antennas, respectively right antenna (12a) and left antenna (11a), each positioned near one of the two wheels, respectively right wheel (3) and left wheel (2), of a single axle, and secondly one frontal antenna (14) positioned near the other axle, wherein said frontal antenna and each lateral antenna (11a and 12a) have coverage zones comprising a common zone in which is located one wheel (4 and 5) mounted on the axle neighbouring the frontal antenna (14),
• the central unit (15) implements a first localisation procedure consisting of successively ordering the transmission by each of the lateral antennas (11a and 12a) of an identification request signal adapted to have a power both greater than the detection threshold of the electronic box (6 and 7) equipping the wheel (2 and 3) located near said lateral antenna and also less than the detection threshold of the other electronic boxes so as to successively localise each of the left (2) and right (3) wheels located near said lateral antennas,
• and the central unit (15) implements a second localisation procedure consisting of ordering the simultaneous transmission by a lateral antenna (11a) and the frontal antenna (14) of two identical, in phase identification request signals of powers adapted for obtaining in the area of the wheel (4) located in the common zone of the coverage zones of said antennas, a resulting signal of power greater than the detection threshold of the electronic box (8) equipping said wheel.

12. Localisation device according to claim 11, **characterised in that** the two lateral antennas (11a and 12a) are each integrated in an indicator repeater positioned near a front wheel (2 and 3) of the vehicle (1), and **in that** the frontal antenna (14) is positioned near the rear axle of said vehicle.

13. Device according to claim 8 for localisation of the wheels of a vehicle (1), **characterised in that**:
• it includes firstly two antennas (11c and 14) consisting of a lateral antenna (11c) and a frontal antenna (14) placed so as to have coverage zones comprising one common zone in which one wheel (4) is located and secondly a power supply means for said antennas comprising a step-up transformer enabling the transmission by each antenna (11c and 14) of signals having in the area of each wheel located in the coverage zone of said antenna a power greater than the detection threshold of the electronic box equipping said wheel,
• the central unit (15) implements a first localisation procedure for a wheel consisting of ordering:
- the supply of the two antennas (11c and 14) by means of the step-up transformer,
- the transmission by one of the two antennas (11c) of an identification request signal,
- and simultaneously with the transmission of the identification request signal, transmission by the other antenna (14) of an interference signal designed to jam the identification request signal,
• the central unit (15) implements a second localisation procedure for a wheel identical to the previous one and for which the role of the two antennas (11c and 14) is reversed,
• and the central unit (15) implements a third localisation procedure for a wheel performed without step-up transformer during which the simultaneous transmission by the two antennas (11c and 14) of two identical, in phase identification request signals of powers adapted for obtaining, in the area of the wheel (4) located in the common zone of the coverage zones of said antennas, a resulting signal of power greater than the detection threshold of the electronic box (8) equipping said wheel is ordered.

## Patentansprüche

1. Verfahren zur Lokalisierung der Position eines Rads (2) eines Fahrzeugs (1), das mit einem Elektronikgehäuse (6) ausgestattet ist, das angepasst ist, um bei Empfang eines Identifikations-Abfragesignals, das stärker ist als eine vorbestimmte Erfassungsgrenze, an eine Zentraleinheit (15), die auf dem Fahrzeug (1) angebracht ist, Signale auszusenden, die für Betriebsparameter des Rads bezeichnend sind, die ferner einen Code zur Identifikation dieses Letzteren umfassen, wobei das Lokalisierungsverfahren darin besteht:
• das Fahrzeug (1) mit zwei Sendeantennen auszustatten, einer Seitenantenne (11) und einer Frontantenne (13), die so angeordnet sind, dass sie Abdeckbereiche aufweisen, die einen gemeinsamen Bereich umfassen, in dem sich das zu lokalisierende Rad (2) befindet, und wobei es **dadurch gekennzeichnet ist, dass** es darin besteht, über die zwei Sendeantennen (11, 13) die Aussendung von zwei phasengleichen Identifikations-Abfragesignalen simultan zu steuern, deren Stärken angepasst sind, um auf Höhe des zu lokalisierenden Rads (2) ein sich ergebendes Signal zu erhalten, das eine größere Stärke als die Erfassungsgrenze des Elektronikgehäuses (6) aufweist, mit dem das Rad ausgestattet ist.

2. Verfahren nach Anspruch 1 zur Lokalisierung von Rädern (2-5) eines Fahrzeugs (1), **dadurch gekennzeichnet, dass**:
• das Fahrzeug (1) mit vier Sendeantennen (11-14) ausgestattet wird, die aus zwei Frontantennen, jeweils eine vordere (13) und eine hintere (14), und zwei Seitenantennen, jeweils eine rechte (12) und eine linke (11), bestehen, die so angeordnet sind, dass sie vier Sendeantennenpaare bilden, jeweils ein Paar "Antenne vorne (13) / Antenne rechts (12)", "Antenne vorne (13) / Antenne links (11)", "Antenne hinten (14) / Antenne rechts (12)" und "Antenne hinten (14) / Antenne links (11)", wobei jedes davon einen Abdeckbereich aufweist, der einen gemeinsamen Bereich umfasst, in dem sich ein zu lokalisierendes Rad (2-5) erstreckt, jeweils das rechte Vorderrad (3), das linke Vorderrad (2), das rechte Hinterrad (5) und das linke Hinterrad (4),
• nacheinander eine simultane und in Phase befindliche Aussendung von zwei Sendeantennen von mindestens drei der vier Sendeantennenpaare (12-13, 11-13, 12-14, 11-14) gesteuert wird, so dass nacheinander jedes der entsprechenden Räder (2-5) identifiziert wird.

3. Lokalisierungsverfahren nach Anspruch 2, **dadurch gekennzeichnet, dass** die Antennen (11-14) einer Vorrichtung zur berührungslosen Entriegelung verwendet werden, mit der das Fahrzeug (1) ausgestattet ist, und die angepasst ist, um das Fahrzeug entriegeln und Letzteres starten zu können.

4. Verfahren nach Anspruch 1 zur Lokalisierung von Rädern (2-5) eines Fahrzeugs (1), **dadurch gekennzeichnet, dass**:
• das Fahrzeug (1) mit drei Antennen (11a, 12a, 14) ausgestattet wird, die einerseits aus zwei Seitenantennen, jeweils eine rechte Antenne (12a) und eine linke Antenne (11a), die jeweils in der Nähe eines der zwei Räder angeordnet sind, jeweils des rechten Rads (3) und des linken Rads (2) ein und derselben Achse, und andererseits aus einer Frontantenne (14) bestehen, die in der Nähe der anderen Achse angeordnet ist, wobei die Frontantenne und jede Seitenantenne (11a, 12a) Abdeckbereiche aufweisen, die einen gemeinsamen Bereich umfassen, in dem sich ein Rad (4, 5) befindet, das von der Achse getragen wird, die an die Frontantenne (14) angrenzt,
• nacheinander über jede der Seitenantennen (11a, 12a) die Aussendung eines Identifikations-Abfragesignals gesteuert wird, das angepasst ist, um eine Stärke aufzuweisen, die einerseits größer als die Erfassungsgrenze des Elektronikgehäuses (6, 7) ist, mit dem das Rad (2, 3) ausgestattet ist, das sich in der Nähe der Seitenantenne befindet, und andererseits geringer als die Erfassungsgrenze der anderen Elektronikgehäuse ist, so dass nacheinander jedes der rechten (3) und linken (2) Räder lokalisiert wird, die sich in der Nähe der Seitenantennen befinden,
• über Seitenantennen (11a, 12a) und die Frontantenne (14) die simultane Aussendung von zwei phasengleichen Identifikations-Abfragesignalen gesteuert wird, deren Stärken angepasst sind, um auf Höhe des Rads (4, 5), das sich im gemeinsamen Bereich der Abdeckbereiche der Antennen befindet, ein sich ergebendes Signal zu erhalten, das eine größere Stärke als die Erfassungsgrenze des Elektronikgehäuses (8) aufweist, mit dem das Rad ausgestattet ist.

5. Lokalisierungsverfahren nach Anspruch 4, **dadurch gekennzeichnet, dass** die zwei Seitenantennen (11a, 12a) jeweils in eine Blinkleuchte integriert werden, die in der Nähe eines Vorderrads (2, 3) des Fahrzeugs (1) angeordnet ist, und **dadurch**, dass die Frontantenne (14) in der Nähe der Hinterachse des Fahrzeugs angeordnet wird.

6. Verfahren nach Anspruch 1 zur Lokalisierung von Rädern (2-5) eines Fahrzeugs (1), **dadurch gekennzeichnet, dass**:
• das Fahrzeug (1) einerseits mit zwei Antennen, die aus einer Seitenantenne (11c) und aus einer Frontantenne (14) bestehen, die so angeordnet sind, dass sie Abdeckbereiche aufweisen, die einen gemeinsamen Bereich umfassen, in dem sich ein Rad (4) befindet, und andererseits mit Mitteln zur Versorgung der Antennen ausgestattet wird, die einen Spannungserhöher umfassen, der imstande ist, über jede Antenne (11c, 14) die Aussendung von Signalen zu ermöglichen, die auf Höhe jedes Rads, das sich im Abdeckbereich der Antenne befindet, eine größere Stärke als die Erfassungsgrenze des Elektronikgehäuses aufweisen, mit dem das Rad ausgestattet ist,
• ein erster Vorgang zur Lokalisierung eines Rads durchgeführt wird, während dessen:
- die zwei Antennen (11c, 14) mithilfe des Spannungserhöhers versorgt werden,
- über eine der zwei Antennen (11c) die Aussendung eines Identifikations-Abfragesignals gesteuert wird,
- simultan zur Aussendung des Identifikations-Abfragesignals über die andere Antenne (14) die Aussendung eines Parasitsignals gesteuert wird, das zum Stören des Identifikations-Abfragesignals konzipiert ist,
• ein zweiter Vorgang zur Lokalisierung eines Rads durchgeführt wird, der mit dem Vorhergehenden identisch ist und bei dem die Rolle der zwei Antennen (11c, 14) umgekehrt ist,
• und ein dritter Vorgang zur Lokalisierung eines Rads ohne Spannungserhöher durchgeführt wird, während dessen über die zwei Antennen (11c, 14) die simultane Aussendung von zwei phasengleichen Identifikations-Abfragesignalen gesteuert wird, deren Stärken angepasst sind, um auf Höhe des Rads (4), das sich im gemeinsamen Bereich der Abdeckbereiche der Antennen befindet, ein sich ergebendes Signal zu erhalten, das eine größere Stärke als die Erfassungsgrenze des Elektronikgehäuses (8) aufweist, mit dem das Rad ausgestattet ist.

7. Lokalisierungsverfahren nach Anspruch 6, **dadurch gekennzeichnet, dass** die Aussendung von Identifikations-Abfragesignalen, die aus Signalen mit "Manchester"-Codierung bestehen, gesteuert wird.

8. Vorrichtung zur Lokalisierung der Position eines Rads (2) eines Fahrzeugs (1), das mit einem Elektronikgehäuse (6) ausgestattet ist, das angepasst ist, um bei Empfang eines elektromagnetischen Identifikations-Abfragesignals, das stärker ist als eine vorbestimmte Erfassungsgrenze, an eine Zentraleinheit (15), die auf dem Fahrzeug (1) angebracht ist, Signale auszusenden, die für Betriebsparameter des Rads bezeichnend sind, die ferner einen Code zur Identifikation dieses Letzteren umfassen, wobei die Lokalisierungsvorrichtung Folgendes umfasst:
• zwei Sendeantennen (11, 13), eine Seitenantenne (11) und eine Frontantenne (13), die so angeordnet sind, dass sie Abdeckbereiche aufweisen, die einen gemeinsamen Bereich umfassen, in dem sich das zu lokalisierende Rad (2) befindet, und wobei sie **dadurch gekennzeichnet ist, dass** sie eine Zentraleinheit (15) umfasst, die einen Lokalisierungsvorgang ausführt, der darin besteht, über die zwei Sendeantennen (11, 13) die Aussendung von zwei phasengleichen Identifikations-Abfragesignalen simultan zu steuern, deren Stärken angepasst sind, um auf Höhe des zu lokalisierenden Rads (2) ein sich ergebendes Signal zu erhalten, das eine größere Stärke als die Erfassungsgrenze des Elektronikgehäuses (6) aufweist, mit dem das Rad ausgestattet ist.

9. Vorrichtung nach Anspruch 8 zur Lokalisierung von Rädern eines Fahrzeugs, **dadurch gekennzeichnet, dass**:
• sie vier Sendeantennen (11-14) umfasst, die aus zwei Frontantennen, jeweils eine vordere (13) und eine hintere (14), und zwei Seitenantennen, jeweils eine rechte (12) und eine linke (11), bestehen, die so angeordnet sind, dass sie vier Sendeantennenpaare bilden, jeweils ein Paar "Antenne vorne (13) /Antenne rechts (12)", "Antenne vorne (13) / Antenne links (11)", "Antenne hinten (14) / Antenne rechts (12)" und "Antenne hinten (14) / Antenne links (11)", wobei jedes davon einen Abdeckbereich aufweist, der einen gemeinsamen Bereich umfasst, in dem sich ein zu lokalisierendes Rad (2-5) erstreckt, jeweils das rechte Vorderrad (3), das linke Vorderrad (2), das rechte Hinterrad (5) und das linke Hinterrad (4),
• die Zentraleinheit (15) nacheinander eine simultane und in Phase befindliche Aussendung von zwei Sendeantennen von mindestens drei der vier Sendeantennenpaare (12-13, 11-13, 12-14, 11-14) steuert, so dass nacheinander jedes der entsprechenden Räder identifiziert wird.

10. Lokalisierungsvorrichtung nach Anspruch 9, **dadurch gekennzeichnet, dass** die Sendeantennen (11-14) von Antennen einer Vorrichtung zur berührungslosen Entriegelung gebildet werden, mit der das Fahrzeug (1) ausgestattet ist, und die angepasst ist, um das Fahrzeug entriegeln und Letzteres starten zu können.

11. Vorrichtung nach Anspruch 8 zur Lokalisierung von Rädern eines Fahrzeugs (1), **dadurch gekennzeichnet, dass**:
• sie drei Antennen (11a, 12a, 14) umfasst, die einerseits aus zwei Seitenantennen, jeweils eine rechte Antenne (12a) und eine linke Antenne (11a), die jeweils in der Nähe eines der zwei Räder angeordnet sind, jeweils des rechten Rads (3) und des linken Rads (2) ein und derselben Achse, und andererseits aus einer Frontantenne (14) bestehen, die in der Nähe der anderen Achse angeordnet ist, wobei die Frontantenne und jede Seitenantenne (11a, 12a) Abdeckbereiche aufweisen, die einen gemeinsamen Bereich umfassen, in dem sich ein Rad (4, 5) befindet, das von der Achse getragen wird, die an die Frontantenne (14) angrenzt,
• die Zentraleinheit (15) einen ersten Vorgang zur Lokalisierung durchführt, der darin besteht, nacheinander über jede der Seitenantennen (11a, 12a) die Aussendung eines Identifikations-Abfragesignals zu steuern, das angepasst ist, um eine Stärke aufzuweisen, die einerseits größer als die Erfassungsgrenze des Elektronikgehäuses (6, 7) ist, mit dem das Rad (2, 3) ausgestattet ist, das sich in der Nähe der Seitenantenne befindet, und andererseits geringer als die Erfassungsgrenze der anderen Elektronikgehäuse ist, so dass nacheinander jedes der rechten (3) und linken (2) Räder lokalisiert wird, die sich in der Nähe der Seitenantennen befinden,
• und die Zentraleinheit (15) einen zweiten Vorgang zur Lokalisierung durchführt, der darin besteht, über eine Seitenantenne (11a) und die Frontantenne (14) die simultane Aussendung von zwei phasengleichen Identifikations-Abfragesignalen zu steuern, deren Stärken angepasst sind, um auf Höhe des Rads (4), das sich im gemeinsamen Bereich der Abdeckbereiche der Antennen befindet, ein sich ergebendes Signal zu erhalten, das eine größere Stärke als die Erfassungsgrenze des Elektronikgehäuses (8) aufweist, mit dem das Rad ausgestattet ist.

12. Lokalisierungsvorrichtung nach Anspruch 11, **dadurch gekennzeichnet, dass** die zwei Seitenantennen (11a, 12a) jeweils in eine Blinkleuchte integriert sind, die in der Nähe eines Vorderrads (2, 3) des Fahrzeugs (1) angeordnet ist, und **dadurch**, dass die Frontantenne (14) in der Nähe der Hinterachse des Fahrzeugs angeordnet ist.

13. Vorrichtung nach Anspruch 8 zur Lokalisierung von Rädern eines Fahrzeugs (1), **dadurch gekennzeichnet, dass**:
• sie einerseits zwei Antennen (11c, 14), die aus einer Seitenantenne (11c) und aus einer Frontantenne (14) bestehen, die so angeordnet sind, dass sie Abdeckbereiche aufweisen, die einen gemeinsamen Bereich umfassen, in dem sich ein Rad (4) befindet, und andererseits Mittel zur Versorgung der Antennen umfasst, die einen Spannungserhöher umfassen, der imstande ist, über jede Antenne (11c, 14) die Aussendung von Signalen zu ermöglichen, die auf Höhe jedes Rads, das sich im Abdeckbereich der Antenne befindet, eine größere Stärke als die Erfassungsgrenze des Elektronikgehäuses aufweisen, mit dem das Rad ausgestattet ist,
• die Zentraleinheit (15) einen ersten Vorgang zur Lokalisierung eines Rads durchführt, der darin besteht, Folgendes zu steuern:
- die Versorgung der zwei Antennen (11c, 14) mithilfe des Spannungserhöhers,
- die Aussendung eines Identifikations-Abfragesignals über eine der zwei Antennen (11c) ,
- und über die andere Antenne (14), simultan zur Aussendung des Identifikations-Abfragesignals, die Aussendung eines Parasitsignals, das zum Stören des Identifikations-Abfragesignals konzipiert ist,
• die Zentraleinheit (15) einen zweiten Vorgang zur Lokalisierung eines Rads durchführt, der mit dem Vorhergehenden identisch ist und bei dem die Rolle der zwei Antennen (11c, 14) umgekehrt ist,
• und die Zentraleinheit (15) einen dritten Vorgang zur Lokalisierung eines Rads ohne Spannungserhöher durchführt, während dessen über die zwei Antennen (11c, 14) die simultane Aussendung von zwei phasengleichen Identifikations-Abfragesignalen gesteuert wird, deren Stärken angepasst sind, um auf Höhe des Rads (4), das sich im gemeinsamen Bereich der Abdeckbereiche der Antennen befindet, ein sich ergebendes Signal zu erhalten, das eine größere Stärke als die Erfassungsgrenze des Elektronikgehäuses (8) aufweist, mit dem das Rad ausgestattet ist.
